# EUROPEAN PATENT APPLICATION

(11) **EP 1 480 376 A1**
(43) Date of publication of application: **24.11.2004**
(21) Application number: 04252964.4
(22) Date of filing: 20.05.2004
(51) Int. Cl.: H04L 12/12, H04L 12/64

(54) **Suspension state control apparatus, suspension state control method, and suspension state control program and information recording medium**

(30) Priority: 22.05.2003 JP 2003145049
(71) Applicant: Pioneer Corporation, Tokyo-to (JP)
(72) Inventor: Matsumaru, Makoto, c/o Pioneer Corporation, Tokorozawa-shi Saitama-ken (JP)
(74) Representative: Townsend, Victoria Jayne

(57) **Abstract**

When controlling a suspension state brought about in a tuner serially-connected by a bus so as to suspend information communication conducted between the tuner and a different apparatus via the bus, a control section judges the number of different apparatuses with which the tuner to be controlled in suspension state conducts the information communication, and controls the tuner so as to bring the information communication in the tuner into the suspension state only when the judged number is one.

## Description

### BACKGROUND OF THE INVENTION

### 1. Field of the Invention

The present invention relates to a suspension state control apparatus, a suspension state control method, and a suspension state control program and an information recording medium having the suspension state control program recorded thereon. In particular, the present invention relates to a suspension state control apparatus and a suspension state control method for controlling a suspension state (the so-called suspension state) which is brought about in any of a plurality of information processing apparatuses included in a network formed by connecting the information processing apparatuses via, for example, a serial bus, so as to suspend information communication conducted between one information processing apparatus and one of other information processing apparatuses via the bus. In addition, the present invention relates to a suspension state control program for controlling the suspension state and an information recordingmedium having the suspension state control program recorded thereon.

### 2. Related Art

In recent years, as standards for transmitting information among a plurality of information processing apparatuses (such as between a personal computer and a digital video camera or a MD (Mini Disk) player) via a serial bus in real time and at high speed, the so-called IEEE 1394 standards (formally "IEEE Std. 1394a-2000 IEEE Standard for a High Performance serial Bus, which is hereafter referred to as serial bus standards) are announced. Digital video cameras and personal computers including a connection terminal and a control section for directly controlling the connection terminal which conform to the serial bus standards (which are hereafter referred to simply as a port) are being commercialized.

According to the serial bus standards, a plurality of information processing apparatuses are connected by cables serving as serial buses and information communication corresponding to a plurality of channels is executed among these information processing apparatuses in a time division form.

When bringing an information processing apparatus into the so-called stand-by state or a suspension state (hereafter referred to simply as a suspension state) , according to the serial bus standards, the port included in the information processing apparatus becomes the so-called suspension initiator on the basis of a suspension command described later and supplied from the control section included in the information processing apparatus.

The suspension initiator (hereafter referred to simply as an initiator) is a termprescribed in the serial bus standards. Specifically, when bringing an information processing apparatus into the suspension state, i.e., when stopping a necessary function in the information processing apparatus and suspending information communication between the information processing apparatus and the other information processing apparatus, a suspension command is output from a control section which controls the whole information processing apparatus to a control section of a port (hereafter referred to a first port) on the information processing apparatus, and thereby a suspension signal (a suspension signal) for bringing information communication via the first port into the suspension state is transmitted to a port (hereafter referred to as a second port) on the other information processing apparatus connected to the first port via the serial bus, and thereafter the first port itself which has become the initiator is brought into the suspension state, and the information communication is suspended.

Here, the suspension command orders some ports which conduct information communication to become a suspension initiator which transmits the suspension signal.

As a general rule, the suspension command for causing a certain port to become the initiator is output from a control section in the information processing apparatus to which the port destined for the initiator belongs, to the port. In the serial bus standards, however, it is also possible to remotely cause a port included in the other information processing apparatus to become the initiator, by outputting a suspension command from a control section in an information processing apparatus which does not include the port, to the port in order to cause a port belonging to the other information processing apparatus which conforms to the serial bus standards to become the initiator.

On the other hand, according to the serial bus standards, the second port which has received the suspension signal from the first port destined for the initiator functions as the so-called suspension target.

The suspension target (hereafter referred to simply as a target) is a term prescribed in the serial bus standards. Specifically, if the first port moves into the suspension state as the initiator in the above-described relation between the first port and the second port, the second port becomes the target in response thereto.

According to the serial bus standards, in the above-described case, not only the second port itself functioning as the target moves into the suspension state and suspends information communication conducted between the first port and the second port, but also the second port has a function of newly causing all other ports which belong to the same physical layer (a physical layer in the other information processing apparatus including the second port) as the second port functioning as the target and which can conduct information transmission (hereinafter, referred to as an active port suitably) to become initiators.

As papers of preceding techniques including the above-described conventional technique relating to the present invention, the following papers can be mentioned.

"IEEE Standard for a high Performance Serial Bus-Amendment 1" IEEE Std. 1394a-2000 (Amendment to IEEE Std. 1394-1995) IEEE Computer Society (published by the Institute of Electrical and Electronics Engineers, Inc.)

IEEE [online] [searched on Jan. 30, 2003], IEEE technical organization Internet <http://www.ieee.org/portal/index.jsp>

The series of processing heretofore described can be summarized as follows. If one information processing apparatus is brought into the suspension state, a first port (active port) connected to the serial bus first becomes an initiator on the basis of a suspension command given by a control device included in the information processing apparatus.

The first port which has become the initiator transmits a suspension signal to an opposite port (the second port) included in the other information processing apparatus connected to the first port via the serial bus.

Upon receiving the suspension signal, the second port becomes the target.

Thereafter, the second port which has become the target causes all other active ports controlled in the same way by a control section which controls the state of a physical layer including the second port which has become the target, to become initiators.

As a result, every active port made to become the initiator by the target further transmits a new suspension signal to an active port included in still the other information processing apparatus connected to the active port via the serial bus.

However, the processing of causing the other active ports to become initiators conducted by the target might cause a chain reaction. If information communication conducted between a first information processing apparatus brought into the suspension state and a second information processing apparatus via the serial bus has become the suspension state, therefore, then even information communication conducted between a third information processing apparatus which is in operation and which is connected to the second information processing apparatus, and the second information processing apparatus might become the suspension state, resulting in a problem.

If among three or more information processing apparatuses connected by a series of serial buses, the first information processing apparatus is brought into the suspension state, then not only the information communication between the first information processing apparatus and the second information processing apparatus is brought into the suspension state, but also information communication between the second information processing apparatus and the third information processing apparatus can be brought into the suspension state and stopped in a range which is not intended by the user, resulting in a possible problem.

Specifically, if a tuner for receivingabroadcast radio wave is brought into a suspension state when the tuner, a DVD (Digital Versatile Disc) player, anda receiver (preamplifier) are connected via a serial bus, information communication between the DVD player and the receiver is also suspended and consequently, for example, reproduction processing of audio information, which has been executed between the DVD player and the receiver, is inadvertently interrupted.

### SUMMARY OF THE INVENTION

The present invention has been achieved in order to solve the problems. An object of the present invention is to provide a suspension state control apparatus and a suspension state control method capable of preventing a shift of information communication between two information processing apparatuses connected based on the serial bus standards to a suspension state from affecting information processing apparatuses other than the two information processing apparatuses, andprovide a suspension state control program for suspension state control and an information recording medium having the suspension state control program recorded thereon.

The above object of the present invention can be achieved by a suspension state control apparatus which controls a suspension of information communication conducted between an information processing apparatus and other information processing apparatuses via a network, provided with: a judging device which judges a number of the other information processing apparatuses with which the information processing apparatus communicates; and a suspension control device which controls the information processing apparatus so as to bring the information communication conducted between the controlled information processing apparatus and the other information processing apparatus into a suspension state, when the judged number is one.

The above object of the present invention can be achieved by a suspension state control method which controls a suspension of information communication conducted between an information processing apparatus and other information processing apparatuses via a network, provided with: a judging process which judges a number of the other information processing apparatuses with which the information processing apparatus communicates; and a suspension control process which controls the information processing apparatus so as to bring the information communication conducted between the controlled information processing apparatus and the other information processing apparatus into a suspension state, when the judged number is one.

The above object of the present invention can be achieved by an information recording medium on which a suspension state control program is recorded so as to be readable by a computer included in a suspension state control apparatus that controls a suspension of information communication conducted between an information processing apparatus and other information processing apparatuses via a network, the suspension state control program causing the computer to function as: a judging device which judges a number of the other information processing apparatuses with which the information processing apparatus communicates; and a suspension control device which controls the information processing apparatus so as to bring the information communication conducted between the controlled information processing apparatus and the other information processing apparatus into a suspension state, when the judged number is one.

### BRIEF DESCRIPTION OF THE DRAWINGS

FIG. 1 is a block diagram showing a schematic configuration of an audio system T;
FIG. 2 is a block diagram showing a general configuration of a suspension function;
FIG. 3 is a state diagram in an audio system T before suspension processing;
FIG. 4 is a state diagram in an audio system T before suspension processing;
FIG. 5 is a state diagram in an audio system T after suspension processing; and
FIG. 6 is a flow chart showing suspension state control processing in an embodiment, in which FIG. 6A is a flow chart showing processing conducted in a control section 13 in a tuner 1 and FIG. 6B is a flow chart showing processing conducted in a control section 23 in a player 2.

### DESCRIPTION OF THE PREFERRED EMBODIMENTS

Preferred embodiments of the present invention will now be described with reference to the drawings.

Embodiments described hereafter are embodiments in the case where the present invention is applied to an audio system formed of a plurality of audio devices serving as information processing apparatuses connected via a serial bus conforming to the serial bus standards.

### (I) Embodiment of configuration and function of audio system

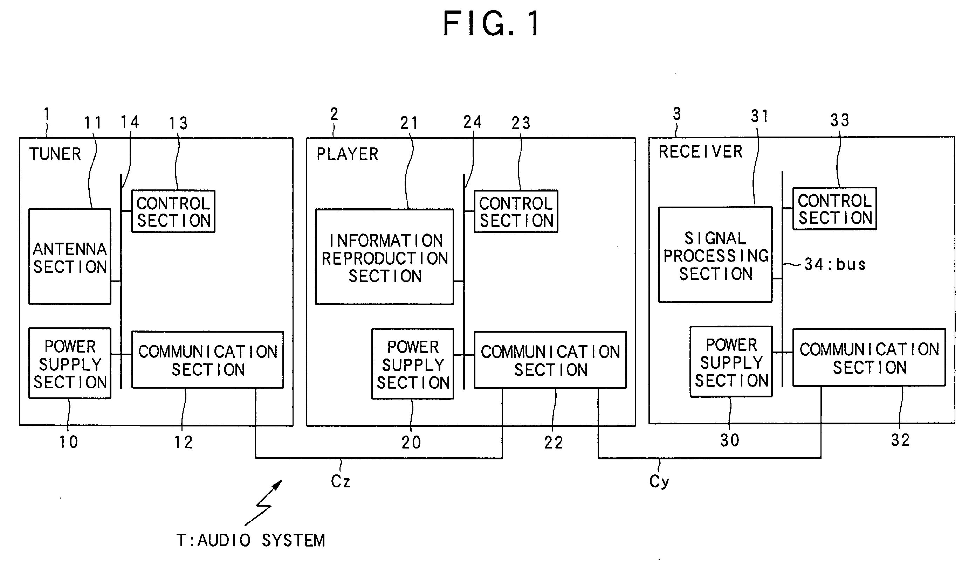

First, a configuration and a function of an audio system according to the present embodiment will be described with reference to FIG. 1. FIG. 1 is a block diagram showing a schematic configuration of an audio system according to the present invention.

As shown in FIG. 1, an audio system T includes a tuner 1 which is an example of an information processing apparatus according to the present invention, and a player 2 and a receiver 3 which are examples of other information processing apparatuses according to the present invention. At this time, the player 2 and the tuner 1 are connected to each other via a serial bus Cx conforming to the serial bus standards. In addition, the player 2 and the receiver 3 are connected to each other via a serial bus Cy conforming to the serial bus standards. The tuner 1, the player 2, and the receiver 3 can conduct information communication to each other via the serial buses Cx and Cy. The serial buses Cx and Cy are examples of a network according to the present invention.

### (A) Embodiment of tuner

First, a configuration and a function of the tuner 1 will now be described.

Specifically, the tuner 1 is, for example, so-called a television, a tuner, or a radio tuner. The tuner 1 selects an electric signal desired to be output, from electric signals generated by receiving broadcast radio waves and outputs it.

Specifically, the tuner 1 includes a power supply section 10, an antenna section 11, a communication section 12 which is an example of an transceiver device according to the present invention, and a control section 13 for controlling the constituent members. The constituent members are connected to each other via a bus 14 so as to be capable of communicating information.

The power supply section 10 generates and supplies power supply power for activating the tuner 1. When the power supply section 10 is in the on-state, the tuner 1 is in the operation state. When the power supply section 10 is in the off-state (i.e., supply of power supply voltage to the tuner 1 is disconnected) , the tuner 1 is in the non-operational state.

The antenna section 11 receives broadcast radio waves, converts them to the received signals, and outputs the converted signals to the control section 13 or the communication section 12.

The communication section 12 includes a port described in detail later. The communication section 12 communicates information with the player 2 (or with the receiver 3 via the player 2) via the serial bus Cx connected to the port.

Specifically, if information to be transmitted is input from the antenna section 11 via the bus 14, the communication section 12 executes transmission processing preset for the information and outputs the information subjected to the transmission processing to the player 2 or the like via the serial bus Cx, under control of the control section 13.

In addition, under control of the control section 13, the communication section 12 executes preset reception processing on information transmitted from the player 2 via the serial bus Cx (or from the receiver 3 via the player 2) and outputs resultant information to the control section 13. The communication section 12 is an example of a transceiver device according to the present invention.

The control section 13 includes a CPU serving as a computer having an arithmetic operation function, a RAM (Random Access Memory) for working, a ROM (Read Only Memory) for storing various control programs inclusive of a communication processing program and data, and an oscillation circuit. Upon receiving an operation signal from an operation section which is not illustrated, the control section 13 generates control information for controlling the constituent members on the basis of operation information included in the operation signal, and outputs the control information to a pertinent constituent member via the bus 14. As a result, the control section 13 exercises general control over operations of the constituent members included in the tuner 1.

In conjunction with the port included in the communication section 12, the control section 13 functions as an example of a transceiver device according to the present invention. In the ensuing embodiments, the "port" refers to a connection terminal itself physically connected to the other information processing apparatus via a serial bus conforming to the serial bus standards, unlike the case described in "BACKGROUND OF THE INVENTION."

If the power supply of the tuner 1 is turned off, the control section 13 transmits the above-described suspension command from the port included in the communication section 12 to a port (hereafter described an opposite port as occasion demands) belonging to a communication section 22 described later and included in the player 2 connected to the port included in the communication section 12 via the serial bus Cx connected with the port. Upon receiving a suspension signal corresponding to the suspension command from the opposite port in the communication section 22, a physical layer control section 12b described later brings the port in the communication section 12 to the suspension state, and suspends the information communication conducted via the serial bus Cx. These suspension functions will be described in detail later with reference to the drawings.

At this time, in the present embodiment, the opposite port included in the communication section 22 in the player 2 becomes the initiator described earlier, and the port included in the communication section 12 in the tuner 1 becomes the target described earlier. In this case, the opposite port which has become the initiator has been made to become the initiator by the control section 13 in the tuner 1 different from the player 2 including the opposite port. In addition, the port in the communication section 12 which has become the target is made to become the target by the suspension signal supplied from the opposite port which is made to become the initiator by the suspension command sent from the control section 13 in the tuner 1 including the port.

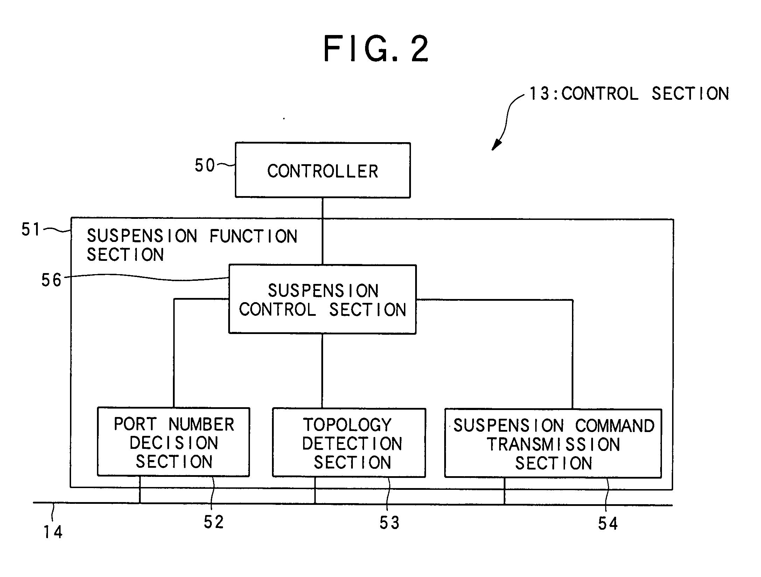

A detailed configuration and a detailed operation of the control section 13 will now be described with reference to FIG. 2. FIG. 2 is a block diagram showing the configuration of the control section 13 which controls the suspension function described heretofore.

As shown in FIG. 2, the control section 13 in the present embodiment includes a controller 50 and a suspension function section 51 which is an example of a control device according to the present invention. The suspension function section 51 includes a port number decision section 52 which is an example of a judging device according to the present invention, a topology detection section 53, a suspension command transmitter section 54 which is an example of an order signal transmission device according to the present invention, and a suspension control section 56 which is an example of a suspension control device and a judging device according to the present invention.

The operation of the control section 13 will now be described.

If the power supply of the tuner 1 is brought into the off-state, the controller 50 controls the suspension function section 51 and causes the suspension function section 51 to execute the above-described suspension function. At this time, the suspension function section 51 fulfills the suspension function under the control of the controller 50.

In conjunction with the suspension control section 56, the port number decision section 52 functions as a judging device. As a result, the port number decision section 52 judges the number of active ports which are actually in the operation state and included in a plurality of ports controlled by a physical layer control section 12b described later belonging to the communication section 12. Specifically, the term "active port" refers to a port which is in such a state that a serial bus is connected thereto and which can communicate signals with the player 2 or the like via the connected serial bus.

On the other hand, from within a system formed by a serial bus connected to the port in the communication section 12, the topology detection section 53 analyzes and detects a node number and a port number corresponding to the opposite port which belongs to the communication section 22 in the player 2 connected via the serial bus Cx connected to the port. In the example shown in FIG. 1, specifically as for the node number and the port number, the node number is a number indicating the player 2, and the port number is a number of the opposite port belonging to the communication section 22 in the player 2 connected via the serial bus Cx.

The suspension command transmitter section 54 transmits a suspension command from the port in the communication section 12 to the opposite port belonging to the communication section 22 in the player 2 via the serial bus Cx connected to the port.

If the suspension command is transmitted, a suspension signal corresponding to the suspension command is transmitted to the port in the communication section 12 by the opposite port of the communication section 22. As a result, the opposite port belonging to the communication section 22 functions as the initiator. On the other hand, the port in the communication section 12 receiving the suspension signal functions as the target.

The suspension control section 56 is provided to exercise general control over operations of the constituent members included in the suspension function section 51. By functioning as a judging device in conjunction with the port number decision section 52, the suspension control section 56 judges the number of active ports in a plurality of ports belonging to a physical layer control section 12b described later and included in the communication section 12. Specifically, the suspension control section 56 determines whether or not other ports serving as transceiver devices other than the active port connected to the serial bus Cx are in the operation state (active state).

Furthermore, by functioning as a transceiver device in conjunction with the active port belonging to the communication section 12, the suspension control section 56 controls the suspension command transmitter section 54 so as to transmit a suspension command to the player 2. As a result, the suspension command transmitter section 54 transmits the suspension command.

Upon receiving the suspension signal from the player 2, the active port connected to the physical layer control section 12b is brought into the suspension state by a function of the physical layer control section 12b described later in the communication section 12. In addition, information communication conducted via the serial bus Cx linking the tuner 1 to the player 2 is brought into the suspension state.

### (B) Embodiment of the player

A configuration and a function of the player 2 will now be described with reference to FIGs. 1 and 2.

As shown in FIG. 1, the player 2 includes a power supply section 20, an information reproduction section 21, a communication section 22 and a control section 23 for controlling the constituent members. The constituent members are connected to each other via a bus 24 so as to be capable of communicating information.

The power supply section 20 generates and supplies power supply power for activating the player 2. When the power supply section 20 is in the on-state, the player 2 is in the operation state. When the power supply section 20 is in the off-state, the player 2 is in the non-operational state.

On the other hand, the information reproduction section 21 includes a loading mechanism for loading a DVD or the like on which information to be reproduced is recorded, a pickup for optically reading the information recorded on the DVD, a spindle motor for driving and rotating the DVD, a servo circuit for servo-controlling the spindle motor and the pickup, and a signal processing section for conducting predetermined demodulation processing on the read information. Under control of the control section 23 , the information reproduction section 21 reproduces video data or audio data supplied as the information, transmits the reproduced video data or the reproduced audio data to the communication section 22 via the bus 24, and transmits the reproduced video data or the reproduced audio data to the receiver 3 via the serial bus Cy.

The communication section 22 includes a plurality of ports. The communication section 22 communicates information with the tuner 1 via the serial bus Cx. If information to be transmitted is input, the communication section 22 executes transmission processing preset on the information and outputs a resultant signal to the tuner 1 via the serial bus Cx, under control of the control section 23.

In addition, under control of the control section 23, the communication section 22 executes preset reception processing on the information transmitted from the tuner 1 via the serial bus Cx and outputs the resultant information to the control section 23.

In addition, the communication section 22 conducts information communication with the receiver 3 via the serial bus Cy in the same way as the case for the tuner 1.

The control section 23 includes a CPU serving as a computer having an arithmetic operation function, a RAM for working, a ROM for storing various control programs inclusive of a communication processing program and data, and an oscillation circuit. Upon receiving an operation signal from an operation section which is not illustrated, the control section 23 generates control information for controlling the constituent members on the basis of the operation information included in the operation signal, and outputs the control information to a pertinent constituent member via the bus 24. As a result, the control section 23 exercises general control over operations of the constituent members included in the player 2.

### (C) Embodiment of the receiver

A configuration and a function of the receiver 3 will now be described with reference to FIG. 1.

As shown in FIG. 1, the receiver 3 includes a power supply section 30, a signal processing section 31, a communication section 32, and a control section 33 for controlling the constituent members. The constituent members are connected to each other via a bus 34.

The power supply section 30 generates and supplies power supply power for activating the receiver 3. When the power supply section 30 is in the on-state, the receiver 3 is in the operation state. When the power supply section 30 is in the off-state, the receiver 3 is in the non-operational state.

On the other hand, the signal processing section 31 conducts predetermined amplification processing on a signal such as video data or audio data transmitted from the player 2 (or from the tuner 1 via the player 2) via the serial bus Cy and supplied from the communication section 32. In addition, under control of the control section 33, the signal processing section 31 reproduces the video data or the like, and transmits the reproduced video data or the like to a monitor or a speaker which is not illustrated, via the bus 34.

The communication section 32 communicates information with the player 2 (or with the tuner 1 via the player 2) via the serial bus Cy. If information to be transmitted is input, the communication section 32 executes preset transmission processing on the information and outputs resultant information to the player 2 (or to the tuner 1 via the player 2) via the serial bus Cy, under control of the control section 33.

In addition, under control of the control section 33, the communication section 32 executes preset reception processing on the information transmitted from the player 2 (or from the tuner 1 via the player 2) via the serial bus Cy and outputs the resultant information to the control section 33.

The control section 33 includes a CPU serving as a computer having an arithmetic operation function, a RAM for working, a ROM for storing various control programs inclusive of a communication processing program and data, and an oscillation circuit. Upon receiving an operation signal from an operation section which is not illustrated, the control section 33 generates control information for controlling the constituent members on the basis of the operation information included in the operation signal, and outputs the control information to a pertinent constituent member via the bus 34. As a result, the control section 33 exercises general control over operations of the constituent members included in the receiver 3.

### (D) Embodiment of the suspension operation

A suspension state control processing according to the present invention will now be described with reference to FIGs. 1 to 6.

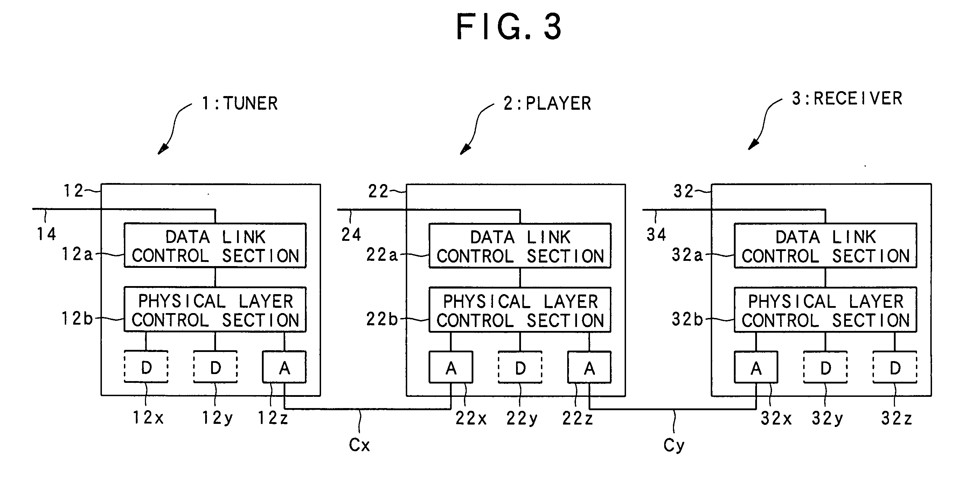

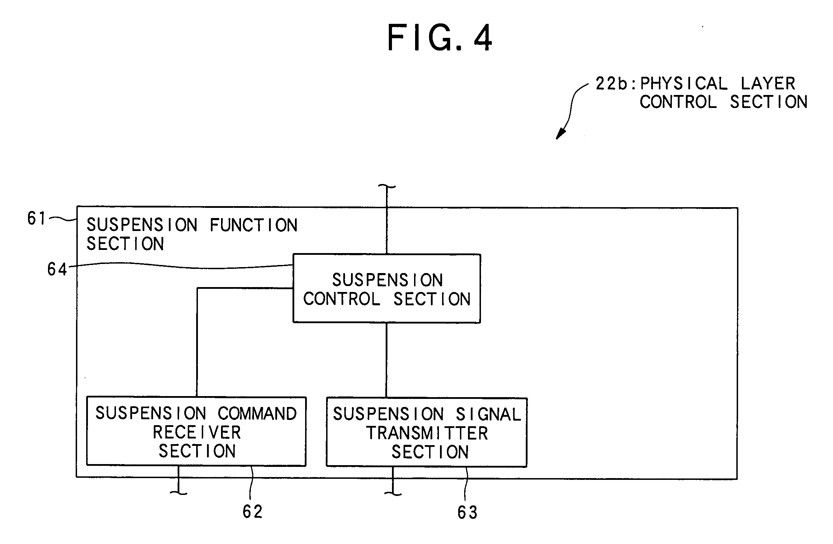

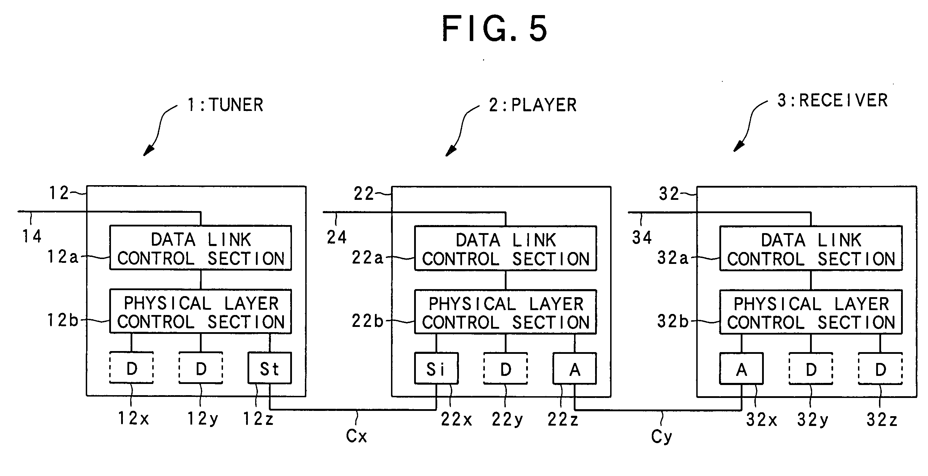

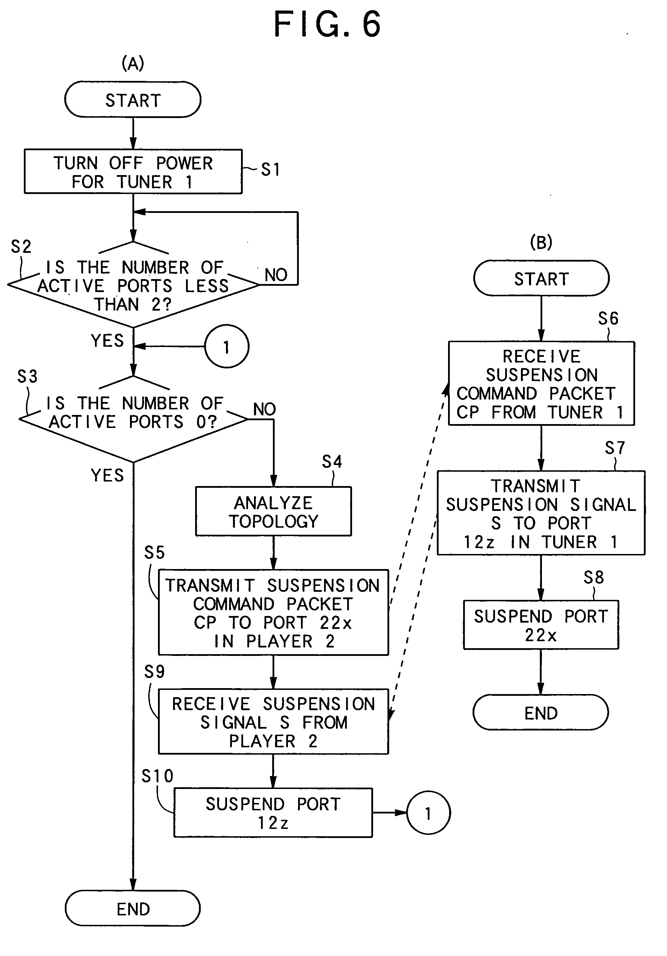

FIGs. 3 to 6 show suspension state control processing in the audio system T shown in FIG. 1. Specifically, FIGs. 3 and 4 are block diagrams showing physical configurations of the communication section 12 and the like in a state obtained in the audio system T before suspension processing. FIG. 5 is a diagram showing a state obtained in the audio system T after the suspensionprocessing. FIG. 6 is a flow chart showing suspension state control processing in an embodiment, in which FIG. 6A is a flow chart showingprocessing conducted in a control section 13 in a tuner 1 and FIG. 6B is a flow chart showing processing conducted in a control section 23 in a player 2.

Hereafter, an embodiment at the time when information communication between the tuner 1 and the player 2 is moved into the suspension state will be described.

First, a physical configuration of the audio system T relating to the embodiment will now be described concretely with reference to FIGs. 3 and 4.

As shown in FIG. 3, the communication section 12 in the tuner 1 includes a data link control section 12a and the physical layer control section 12b.

The data link control section 12a corresponds to a link layer (a link layer which is a second layer in the so-called OSI (Open Systems Interconnection) reference model) in the serial bus standards. The data link control section 12a prescribes rules for the time when communication is conducted between transceiver apparatuses such as computers (for example, between the tuner 1 and the player 2 in the present embodiment) directly coupled on a network connected by serial buses, and discriminates the node and port identifying the data transmission destination.

On the other hand, the physical layer control section 12b corresponds to a physical layer (a physical layer which is a first layer in the OSI reference model) in the serial bus standards. Irrespective of contents of data transmitted and received on the network, the physical layer control section 12b prescribes a physical connection and a transmission scheme of the network. In addition, the physical layer control section 12b prescribes a scheme for transforming information when communicating information between the transceiver apparatuses (between the tuner 1 and the player 2 in the present embodiment). Aport 12x, a port 12y and a port 12z are connected to the physical layer control section 12b.

In the same way, the communication section 22 in the player 2 includes a data link control section 22a and a physical layer control section 22b.

A port 22x, a port 22y and a port 22z are connected to the physical layer control section 22b. As shown in FIG. 4 , the physical layer control section 22b includes a suspension command receiver section 62, a suspension signal transmitter section 63, and a suspension control section 64 for controlling the suspension command receiver section 62 and the suspension signal transmitter section 63, which are connected to the ports 22x, 22y and 22z, respectively.

Referring back to FIG. 3, the communication section 32 in the receiver 3 includes a data link control section 32a and a physical layer control section 32b. The physical layer control section 32b is connected to a port 32x, a port 32y, and a port 32z.

In FIG. 3 showing a state obtainedbefore the information communication between the tuner 1 and the player 2 moves into the suspension state, both the ports 12x and 12y in the tuner 1 are ports which are not actually communicating information (denoted by a character "D" in FIG. 3). Here, "the port which is not actually communicating information" means a port in such a state that information transmission and reception are impossible between the port and the other information processing apparatus, such as a state in which a serial bus is not connected thereto.

On the other hand, the port 12z serving as an example of a transceiver device is an active port which can communicate information with the player 2 via the connected serial bus Cx (which is denoted by a character "A" in FIG. 3).

On the other hand, the port 22x in the player 2 serving as an example of a transceiver device is an active port capable of communicating information with the tuner 1 via the connected serial bus Cx. In addition, the port 22z is also an active port capable of communicating information with the receiver 3 via the connected serial bus Cy in the same way. On the other hand, the port 22y is a port which is in such a state that information cannot be communicated with the other information processing apparatus.

The port 32x in the receiver 3 is an active port capable of communicating information with the player 2 via the connected serial bus Cy. The ports 32y and 32z is a port which is in such a state that information cannot be communicated with the other information processing apparatus.

Operation of the physical layer control section 22b in the player 2 according to the embodiment will now be described in detail.

If an operation for bringing the tuner 1 into the suspension state is executed in the tuner 1 at the beginning of the suspension operation according to the embodiment, the control section 13 in the tuner 1 generates a suspension command corresponding to the operation as described above and outputs the suspension command to the player 2 via the serial bus Cx.

Subsequently, upon receiving the suspension command via the serial bus Cx, the physical layer control section 22b automatically executes the suspension function.

Specifically, upon receiving the suspension command from the port 12z in the communication section 12 in the tuner 1 via the serial bus Cx and the port 22x, the suspension command receiver section 62 in the physical layer control section 22b outputs a notice signal to that effect to the suspension control section 64.

In response to the notice signal output from the suspension command receiver section 62, the suspension control section 64 controls the suspension signal transmitter section 63 so as to transmit a suspension signal corresponding to the suspension command from the port 22x. As a result, the suspension signal transmitter section 63 outputs the suspension signal to the port 12z in the tuner 1 on the basis of the control exercised by the suspension control section 64.

After the transmission of the suspension signal, the suspension control section 64 brings the port 22x into the suspension state, and brings information communication conducted via the serial bus Cx which links the tuner 1 to the player 2 into the suspension state.

Concepts serving as premises for the suspension operation in the embodiment will now be described.

In the serial bus standards, an information processing apparatus in a state in which information can be communicated with the other information processing apparatus connected to a serial bus is generally referred to as a leaf node, and an information processing apparatus in a state in which information can be communicated with two or more other information processing apparatuses is generally referred to as a branch node.

Applying this to the case shown in FIG. 3, the tuner 1 becomes the leaf node in the so-called topology prescribed by the serial bus standards, because the tuner 1 has only one active port (the port 12z) in the physical layer control section 12b in its communication section 12. The receiver 3 also becomes a leaf node in the topology in the same way, because the receiver 3 has only one active port (the port 32x) in the physical layer control section 32b in its communication section 32.

On the other hand, the player 2 becomes a branch node in the topology, because the player 2 has two active ports (the ports 22x and 22z) in the physical layer control section 22b in its communication section 22.

Supposing the state shown in FIGs. 3 and 4, the state in which the information communication between the tuner 1 and the player 2 is brought into the suspension state will now be described by referring to FIG. 5.

If an operation for bringing the tuner 1 into the suspension state is executed in the tuner 1, the control section 13 in the tuner 1 first determines whether the tuner 1 is a leaf node in order to bring the information communication between the tuner 1 and the player 2 into the suspension state. The determination processingwill be described in detail later. Only in the case where the tuner 1 is a leaf node, the control section 13 in the tuner 1 causes the port 22x in the player 2 connected to the port 12z which is the only active port in the tuner 1 to become an initiator.

Therefore, the control section 13 in the tuner 1 outputs the suspense command to the port 22x.

Upon receiving the suspension command, the port 22x functions as an initiator Si on the basis of the control of the control section 23 which regulates the port 22x (see a character "Si" shown in FIG. 5). Further, the physical layer control section 22b in the communication section 22 transmits a suspension signal to the port 12z in the tuner 1 via the port 22x which has become the initiator Si, and moves the port 22x into the suspension state.

Upon receiving the suspension signal, the port 12z functions as a target St on the basis of the control of the physical layer control section 12b which regulates the port 12z (see character "St" shown in FIG. 5). That is, the physical layer control section 12b functions as an example of a physical layer control device according to the present invention.

As described above, under serial bus standards according to the present invention, not only the port 12z functioning as the target St is brought into the suspension state, but also all active ports belonging to the same physical layer control section 12b as the port 12z functioning as the target St function as initiators Si.

In the case where the port functioning as the target St belongs to the branch node, every active port belonging to that node becomes an initiator Si, and transmits a suspension signal to its opposite port, and is brought into the suspension state. The suspension state thus causes a chain reaction. In the present invention, therefore, an information processing apparatus to which the port functioning as the target St belongs is limited to an information processing apparatus serving as the leaf node.

Control processing in the suspension state in the case where the power supply of the tuner 1 is turned off will now be described with reference to the flow chart shown in FIG. 6.

The processing shown in the flow chart of FIG. 6A is executed by the control section 13 on the basis of a suspension state control program previously stored in a ROM which is included in the control section 13 andwhich is not illustrated. On the other hand, the processing shown in the flow chart of FIG. 6B is executed by the control section 23 on the basis of a suspension state control program previously stored in a ROM which is included in the control section 23 and which is not illustrated.

In the suspension state control processing in the embodiment shown in FIG. 6, the power supply section 10 in the tuner 1 is first turned off and the control section 13 recognizes it (step S1). Under the control of the controller 50 responding to this, the port number decision section 52 in the suspension function section 51 determines whether the number of active ports in the ports 12x, 12y and 12z is less than two (step S2).

If the number of active ports in the tuner 1 is less than two (YES in step S2), the processing proceeds to step S3. On the other hand, if the number of active ports is at least two (NO in step S2) , the processing waits while repeating the processing of step S2.

Subsequently, in processing at step S3, it is detected whether the number of active ports in the tuner 1 is 0. If the number of active ports in the tuner 1 is 0 (YES in step S3), then it means that the tuner 1 is not performing any information communication with the other information processing apparatus at the present time and consequently the suspension control processing in the embodiment is finished. On the other hand, if the number of active ports in the tuner 1 is not 0 (NO in step S3), i.e. , if there is only one active port in the tuner 1 (NO in step S3, the only one active port is the port 12z in the case shown in FIG. 5) , then the topology detection section 53 in the suspension function section 51 analyzes and detects the node number and the port number of the port 22x which is the opposite port in the player 2 connected to the port 12z via the serial bus Cx (step S4). In the example shown in FIGs. 4 and 5, the node number is a number indicating the player 2 and the port number is a number indicating the port 22x which is the active port.

If the node number and the port number of the opposite port are discriminated, then a suspension command is transmitted from the suspension command transmitter section 54 to the detected opposite port, i.e. , the port 22x via the serial bus Cx (step S5).

When the suspension command is transmitted, in the processing shown in FIG. 6B, the physical layer control section 22b in the communication section 22 in the player 2 including the port 22x receives the suspension command from the opposite port 22x via the serial bus Cx from the active port 12z in the tuner 1 (step S6).

As a result, the physical layer control section 22b makes the port 22x function as the initiator Si, transmits a suspension signal to the port 12z in the tuner 1 via the serial bus Cx (step S7). Thereafter, the physical layer control section 22b brings the port 22x into the suspension state (step S8).

Referring back to FIG. 6A, upon receiving the suspension signal from the port 22x (the initiator Si) via the serial bus Cx (step S9), the physical layer control section 12b in the communication section 12 included in the tuner 1 makes the port 12z function as the target St, and brings the port 12z into the suspension state (step S10).

As a result of the operations heretofore described, the information communication between the tuner 1 and the player 2 is moved into the suspension state. At this time, however, there are no other active ports under the physical layer control section 12b to which the port 12z as the target St belongs, as described above. Therefore, the suspension state established between the tuner 1 and the player 2 does not cause a chain reaction in the other information processing apparatus.

According to the suspension state control processing in the audio system T in the embodiment, the port 22x functions as the initiator Si transmitting the suspension signal as described with reference to the step S7, and the port 12z functions as the target St receiving the suspension signal as described with reference to the step S9. In the player 2, the port 22x thus functions as the initiator Si. Even if the player 2 is a branch node, i.e., if the player 2 has an other active port in the same physical layer control section 22b, therefore, only the port 22x which should be suspended in information communication canbebrought into the suspension state without affecting the other active port.

In addition, in the case where a plurality of information processing apparatuses are connected to each other via a serial bus, it also becomes possible for each individual information processing apparatus itself to manage its own power supply.

In the embodiment, the port 12z in the tuner 1 is made to function as the target St, and the port 22x in the player 2 is made to function as the initiator Si. However, this is not restrictive. If the suspension state is controlled so as to cause an active port belonging to a node as a leaf node in two active ports interconnected via the serial bus to become the target St, the effect expected in the present invention can be obtained.

For example, it is possible to control the suspension state by using the control section 33 in the receiver 3, and thereby transmit a suspension command from the port 32x to the port 22z in the player 2 connected to the port 32x via the serial bus Cy, and make the port 32x function as the target St and make the port 22z function as the initiator Si. In this case, there are no other active ports in the physical layer control section 32b including the port 32x. Therefore, it is possible to bring only the port 32x and the port 22z desired to be suspended into the suspension state and bring them into the suspension state in which information communication is suspended.

As heretofore described, according to the suspension state control processing in the audio system T in the embodiment, the number of the other information processing apparatuses with which the tuner 1 controlled in suspension state conducts information communication is judged. Only when the number is one, the tuner 1 is controlled so as to bring the information communication in the tuner 1 into the suspension state. Therefore, the suspension state in the information communication in the tuner 1 does not cause a chain reaction in the other information processing apparatus, and information communication which is being executed by the other information processing apparatus is not interrupted.

Furthermore, only when the number of the other information processing apparatuses with which the tuner 1 conducts information communication is one, the tuner 1 is controlled so as to transmit a suspension command to the other information processing apparatus. Therefore, it is possible to effectively prevent the suspension state from causing a chain reaction in the other information processing apparatuses.

Both in the case where the tuner 1 is brought into the suspension state and in the case where the function of the tuner 1 itself is brought into the suspension state, the tuner 1 is controlled so that the information communication in the tuner 1 is brought into the suspension state only when the number of the other information processing apparatuses with which the tuner 1 conducts information communication is one. In any of those cases , information communication which is being executed by the other information processing apparatus is not interrupted.

Both in the case where the tuner 1 is brought into the suspension state and in the case where the function of the tuner 1 itself is brought into the suspension state, it is prohibited to bring information communication in the tuner 1 into the suspension state, when the number of the other information processing apparatuses with which the tuner 1 conducts the information communication is at least two. If at least two information processing apparatuses are connected to the tuner 1 in any of those cases, information communication which is being executed in the connected information processing apparatuses is not interrupted.

The embodiment in the case where the tuner 1 is brought into the suspension state has been described. If the tuner 1 is brought into the suspension state by the processing in the embodiment, however, the player 2 which has been the branch node until then becomes the leaf node. If an operation for bringing the player 2 which has become the leaf node into the suspension state is executed in the player 2, therefore, the suspension operation in the embodiment is executed between the player 2 and the receiver 3.

Thus, according to the suspension operation control in the embodiment, even in a network having a large number of nodes connected thereto, it is not necessary to collectively conduct management in the network when the nodes are moved into the suspension state, but the management in the network can be executed distributively.

In the embodiment, the case where the present invention is applied to an example of a network having nodes connected via serial buses has been described. Besides, the present invention can also be applied to a network having nodes connected by, for example, parallel buses or radio communication.

Furthermore, in the embodiment, it is also possible to record a program corresponding to the flow chart shown in FIG. 6 on a flexible disk, or acquire the program corresponding to the flow chart via a network such as the Internet and record the program, and read and execute the program in a general-purpose computer such as a microcomputer, and thereby make the computer function as the control section 13, 23 or 33 according to the embodiment.

The invention may be embodied in other specific forms without departing from the spirit or essential characteristics thereof. The present embodiments are therefore to be considered in all respects as illustrative andnot restrictive, the scope of the invention being indicated by the appended claims rather than by the foregoing description and all changes which come within the meaning and range of equivalency of the claims are therefore intended to be embraced therein.

## Claims

1. A suspension state control apparatus which controls a suspension of information communication conducted between an information processing apparatus and other information processing apparatuses via a network, **characterized in that** said suspension state control apparatus comprises:
a judging device (52, 56) which judges a number of the other information processing apparatuses with which the information processing apparatus communicates; and
a suspension control device (56) which controls the information processing apparatus so as to bring the information communication conducted between the controlled information processing apparatus and the other information processing apparatus into a suspension state, when the judged number is one.

2. The suspension state control apparatus according to claim 1, further comprising an order signal transmission device (54) which transmits an order signal to at least any one of the other information processing apparatuses, the order signal ordering the other information processing apparatus to transmit a suspension signal to the controlled information processing apparatus, the suspension signal bringing the information communication conducted between the controlled information processing apparatus and the other information processing apparatus into the suspension state;
wherein the suspension control device (56) brings the information communication into the suspension state by controlling the order signal transmission device (54) so as to transmit the order signal.

3. The suspension state control apparatus according to claim 1, wherein the judging device (52, 56) starts judging the number of the other information processing apparatuses with which the controlled information processing apparatus communicates, when the information communication of the controlled information processing apparatus is brought into the suspension state.

4. The suspension state control apparatus according to claim 1, wherein the suspension control device (56) controls the controlled information processing apparatus so as to prohibit the information communication of the controlled information processing apparatus from being brought into the suspension state, when the judged number is at least two.

5. The suspension state control apparatus according to any one of claims 1 to 4, wherein the information communication is conducted on the basis of the IEEE (Institute of Electrical and Electronic Engineers) 1394a-2000 standards.

6. An information processing apparatus **characterized in that** said information processing apparatus comprises:
the suspension state control apparatus according to claim 2,
a transceiver device (12) which transmits the order signal from the order signal transmission device (54) via the network, and receives the suspension signal; and
a physical layer control device (12b) which brings the information communication conducted between the controlled information processing apparatus and the other information processing apparatus into the suspension state, when the transceiver device (12) receives the suspension signal,
wherein the suspension control device (56) controls the order signal transmission device (54) so as to transmit the order signal to the other information processing apparatus , when the judged number is one.

7. A suspension state control method which controls a suspension of information communication conducted between an information processing apparatus and other information processing apparatuses via a network, **characterized in that** said suspension state control method comprises:
a judging process which judges a number of the other information processing apparatuses with which the information processing apparatus communicates; and
a suspension control process which controls the information processing apparatus so as to bring the information communication conducted between the controlled information processing apparatus and the other information processing apparatus into a suspension state, when the judged number is one.

8. An information recording medium on which a suspension state control program is recorded so as to be readable by a computer included in a suspension state control apparatus that controls a suspension of information communication conducted between an information processing apparatus and other information processing apparatuses via a network, **characterized in that** the suspension state control program causes the computer to function as:
a judging device (52, 56) which judges a number of the other information processing apparatuses with which the information processing apparatus communicates; and
a suspension control device (56) which controls the information processing apparatus so as to bring the information communication conducted between the controlled information processing apparatus and the other information processing apparatus into a suspension state, when the judged number is one.
